# EUROPEAN PATENT SPECIFICATION

(11) **EP 2 378 327 B1**
(45) Date of publication and mention of the grant of the patent: **14.03.2018**
(21) Application number: 11162511.7
(22) Date of filing: 14.04.2011
(51) Int. Cl.: G02B 6/00

(54) **Light guide panel assembly**
Lichtleiterplattenanordnung
Ensemble de panneau de guide lumineux

(30) Priority: 16.04.2010 GB 201006375
(43) Date of publication of application: 19.10.2011
(73) Proprietor: Zeta Specialist Lighting Limited, Bicester Oxfordshire OX26 4LD (GB)
(72) Inventor: Shadbolt, Philip David, Bicester OX27 8DL (GB); Dent, Nigel Alastair, Oxford OX3 0DS (GB)
(74) Representative: J A Kemp

(56) References cited:
- EP-A1- 1 780 584
- WO-A1-2008/152563
- WO-A2-2006/137660
- JP-A- 2004 127 922
- US-A1- 2004 136 173
- US-A1- 2004 207 775
- US-A1- 2008 310 158

## Description

This invention relates to light guide panel assemblies.

Such panel assemblies can be used to provide illuminated signs, such as road signs, which may convey a message by virtue of their shape or by masking provided on the panel assembly. They may also be used for back-lighting of displays such as liquid crystal computer screens or television screens.

A conventional panel assembly of this type is shown in EP-A1-1780584 and comprises a translucent panel (for example of acrylic) and at least one light-emitting device (such as an light emitting diode, or LED) arranged for producing a divergent beam of light and projecting the light into the panel from a light-receiving edge of the panel. As the light passes through the panel, it is internally reflected by the front and rear faces of the panel and at least some of the light is transmitted by at least one light-emitting surface portion of at least one of the faces so as to illuminate that surface portion. At least one other surface portion of that face may be opaque so that an illuminated pattern is formed on that face. Alternatively, substantially all of one or each face may be light-emitting, so that the whole face (which may have a particular shape such as a direction arrow) is illuminated.

Although high-power LEDs are reasonably efficient at converting electrical energy into light energy, they do produce heat and can become hot. The hotter the temperature at which an LED is run, the shorter its life. It is therefore desirable to conduct the heat away from the LED.

It is desirable that the light emitting device(s) and any other electrical components contained in the panel assembly are protected against the ingress of moisture.

It is also desirable that the light-emitting face of the panel assembly provides uniform illumination (other than in areas where the face is intended to be masked). However, generally speaking, the further the light travels through the panel from the light-emitting device, the less intense it becomes. Also, if the light-emitting device(s) are not properly positioned, for example being canted over, they can produce aberrations in the illumination.

An aim of the present invention, or at least of specific embodiments of it, is to provide a light guide panel assembly which can: conduct heat effectively away from the light-emitting device(s); establish and maintain proper positioning of the light emitting device(s); provide a seal against ingress of moisture to the light-emitting devices; provide substantially uniform illumination of the light-emitting face of the panel assembly (other than in areas where the face is intended to be masked); and accomplish all of the aforesaid in a simple, convenient and inexpensive manner.

In accordance with a first aspect of the present invention, there is provided a light guide panel assembly comprising: a translucent panel having a light-receiving edge, a groove being formed in one face of the panel, the groove having a first side wall forming a light-receiving edge of the panel; a light-emitting device mounted on a circuit board, the light emitting device being in contact with the light-receiving edge and arranged for producing a divergent beam of light and projecting the light into the panel from the light-receiving edge of the panel; a compressible element formed of a resilient, flexible and thermally conductive material disposed in the groove so as to abut a rear face of the circuit board; and a heatsink arranged to compress the compressible element into the groove so the compressible element is resiliently compressed between the rear face the circuit board and the heatsink so as to urge itself into contact with said rear face of the circuit board (38) and the heatsink to provide a thermal path therebetween and to urge the light emitting device into contact with said light receiving edge so as to hold the light emitting device in place on said light receiving edge.

The light emitting device is preferably one of a plurality of surface mounted light-emitting devices mounted on one face of a common, elongate circuit board, and the compressible element is preferably elongate and is compressed against the heatsink and an opposite face of the circuit board.

The light-receiving edge of the panel may include at least a portion which is not straight, in which case the circuit board is preferably flexible and conforms to the shape of the light-receiving edge of the panel. This conveniently enables complex shapes of panel assembly to be provided.

The circuit board may have connection pads at each end of the circuit board, so that a plurality of the circuit boards can be daisy-chained together in a single panel assembly and/or in separate panel assemblies.

As indicated above, the light-receiving edge of the panel is formed by a side wall of a groove formed in one face of the panel, and the light-emitting device(s) and compressible element are disposed in the groove, therefore enabling the opposite face of the panel to be uninterrupted. The compressible element is preferably disposed in compression against a bottom wall of the groove and against an opposite side wall of the groove, with the heatsink closing off the groove at the rear face of the panel.

A front face of the panel preferably has at least one light-emitting surface portion which specularly reflects and transmits light incident thereon from within the panel, and a rear face of the panel preferably specularly reflects and scatteringly reflects light incident thereon from within the panel. This enables the panel to act as a light guide and to illuminate the front face.

The rear face of the panel preferably specularly reflects and scatteringly reflects light incident thereon from within the panel with a ratio of specular to scattering reflection which is non-uniform across the rear face of the panel, preferably so as to cause substantially uniform illumination of the front face.

The non-uniform reflection ratio may be provided by the rear face of the panel having a smooth surface interrupted by surface irregularities having a density which is non-uniform across the rear face of the panel. In particular, the surface irregularities may have depths which are non-uniform across the rear face of the panel and/or pitches relative to adjacent irregularities which are non-uniform across the rear face of panel. The surface irregularities may be formed by grooves in the rear surface of the panel. The grooves may be substantially straight and parallel, especially in the case of a rectangular panel illuminated along one edge, and/or they may be curved and/or non-parallel and/or non-concentric in the case of more complex shapes of panel.

The panel assembly preferably further includes a scatteringly reflective surface disposed against the rear face of the panel so that any light that escapes through the rear face is reflected back to the rear face. In the case where a heatsink is provided, the scatteringly reflective surface may be provided by the heatsink.

The or each light-emitting surface portion of the front face of the panel preferably (a) specularly reflects substantially all light incident thereon from within the panel at an angle of incidence greater than the critical angle; and (b) transmits substantially all light incident thereon from within the panel at an angle of incidence less than the critical angle.

Specific embodiments of the present invention will now be described, purely by way of example, with reference to the accompanying drawings, in which:
- Figure 1: is an exploded isometric view of a first embodiment of light guide panel assembly with its centre portion cut away;
- Figure 2A-C: are sectioned side views of the light guide panel assembly of Figure 1, exploded in Figure 2A, partly assembled in Figure 2B, and fully assembled in Figure 2C;
- Figures 3A-D: are side views of the panel assembly of Figures 1 and 2 showing sample light rays resulting in emission of light from four different regions on a front face of the panel assembly;
- Figure 4A & B: are side views on a larger scale showing two different arrangements of surface irregularities on two portions of the rear face of the panel assembly;
- Figures 5A & B: are a sectioned side view and a sectioned underplan view, respectively, of a second embodiment of light guide panel assembly;
- Figures 6A & B: are a sectioned side view and a sectioned underplan view, respectively, of a third embodiment of light guide panel assembly; and
- Figure 7: is an isometric view of a modified printed circuit board assembly for use in the embodiments of the invention.

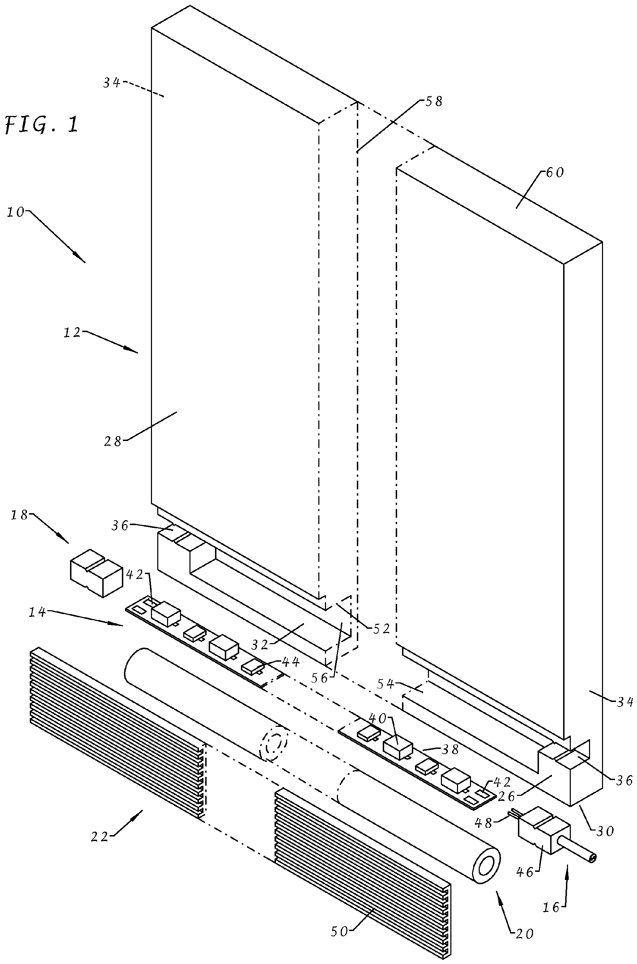

Referring to Figures 1 to 2C, the first embodiment of light guide panel assembly 10 comprises a panel 12, a printed circuit board (PCB) assembly 14, a two-core connection lead 16, a blanking plug 18, a compression element 20, a heatsink 22 and a backing sheet 24 (not shown in Figure 1).

The panel 12 is generally rectangular and is made of acrylic. A rabbet 26 is formed in the rear face 28 and one edge 30 of the panel 12. A deep groove 32 is formed in the rabbeted portion of the panel 12 and extends almost to the ends 34 of the panel 12. The innermost edge 52 of the deep groove 32 is preferably polished. Smaller grooves 36 are formed between the ends of the deep groove 32 and the ends 34 of the panel 12.

The PCB assembly 14 comprises a flexible PCB 38 made from Kapton® or similar material. The PCB 38 is in the form of a strip having a length slightly less than the length of the groove 32 in the panel 12 and a width slightly less than the depth of the groove 32 in the panel 12. A plurality of flat-faced surface-mount LEDs 40 are mounted on the PCB 38. The PCB 38 has a pair of connecting pads 42 at each of its ends. The PCB 38 may also carry other components 44 such as voltage-dropping resistors and/or current regulators. The LEDs 40, connecting pads 42 and other components 44 are connected by tracks (not shown) of the PCB 38 so that when the connecting pads 42 at one end of the PCB 38 are connected to a electrical supply of a particular voltage and polarity, an appropriate electrical current passes through each LED 40 to illuminate it, and also the supply voltage is fed to the connecting pads 42 at the opposite end of the PCB 38.

The connection lead 16 has a moulded resilient grommet 46 adjacent one end which is a tight fit in the smaller groove 36 at one end 34 of the panel 12 and which naturally protrudes slightly above the groove 36. During assembly of the panel assembly 10, the cores 48 of the lead 16 are soldered to the connecting pads 42 at the adjacent end of the PCB 38. The other end of the lead 16 is connected to an electrical supply, such as a battery pack or a mains-to-DC adapter. The blanking plug 18 is a tight fit in the smaller groove 36 at the opposite end 34 of the panel 12 and naturally protrudes slightly above the groove 36. As an alternative to using the blanking plug 18, the smaller groove 36 at that end 34 of the panel 12 may be omitted. Alternatively, a further connection lead may be fitted similarly to the connection lead 16 and soldered to the connecting pads 42 at the adjacent end of the PCB 38 so that electricity can be fed to another light guide panel assembly.

The compression element 20 is a tubular O-rope formed from doped silicone rubber which is resilient, has a high thermal conductivity and is waterproof. For example, the compression element may be made of Primasil PR910/1388 available from Primasil Silicones, HR4 8QU, United Kingdom, and having a thermal conductivity of about 1.5 W.m⁻¹.K⁻¹. The length of the compression element 20 is slightly longer than the length of the deep grove 32. The compression element 20 has an outer diameter which is slightly greater than the depth of the deep groove 32 and slightly greater than the width of the deep groove 32 less the height of the PCB assembly 14.

The heatsink 22 is formed from a plate of aluminium alloy having a width equal to the width of the rabbet 26 and a length equal to the length of the panel 12 between its ends 34. The heatsink 22 may be plain or (as shown) it may be formed with fins 50 on one face.

The backing sheet 24 is formed from plastics film having a matt-white self-adhesive surface. The backing sheet 24 is the same size as the rear non-rabbeted portion of the panel 12.

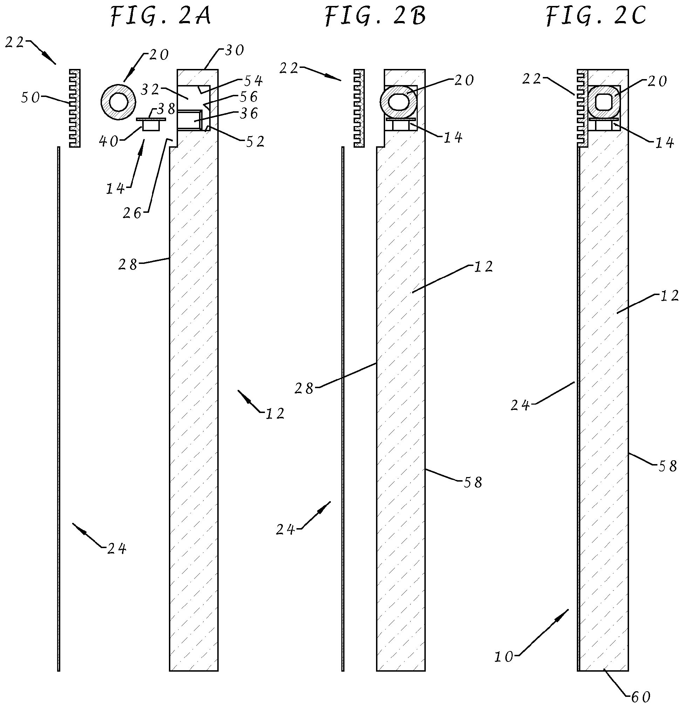

Referring in particular to Figures 2A & B, during assembly of the panel assembly 10, the PCB assembly 14 is placed in the deep groove 32 with the light-emitting faces of the LEDs 40 abutting the polished innermost edge 52 of the deep groove 32, and the grommet 46 of the connection lead 16 and the blanking plug 18 are squeezed into the smaller grooves 36. The compression element 20 is then squeezed into the deep groove 32 so that it abuts the rear of the PCB assembly 14, the outermost edge 54 of the groove 32 and the bottom 56 of the groove 32. As can be seen in Figure 2B, the compression element 20 naturally protrudes from the deep groove 32. Then, adhesive is applied to the plain face of the heatsink 22 and/or to the rabbet 26, and the heatsink 22 is pressed into the rabbet 26 so as to compress the compression element 20 into the deep groove 32, as shown in Figure 2C, and also compress the grommet 46 and blanking plug 18 into the smaller grooves 36. External pressure is maintained until the adhesive has cured. Also, as shown in Figure 2C, the backing sheet 24 is adhered to the rear non-rabbeted portion of the panel 12.

It will therefore be appreciated that the thermally-conductive compression element 20 urges itself into good contact with the rear of the PCB assembly 14 and the heatsink 22 so as to provide a good thermal path between the two. The compression element 20 also urges the light-emitting faces of the LEDs 40 into contact with the edge 52 of the groove 32. Moreover, the compression element 20 serves to prevent any moisture which enters between the panel 12 and the heatsink 22 at the edge 30 of the panel 12 from reaching the PCB assembly 38.

In operation, the LEDs 40 each produce a divergent beam having a viewing half-angle of, for example, 30 to 40 degrees and possibly greater. The acrylic material of the panel 12 has a refractive index of about 1.49, and therefore the critical angle at the acrylic-air interface is about 42 degrees. The front face 58 of the panel 12 is polished so that:
substantially all light incident on the front face 58 from within the panel 12 is specularly reflected if the angle of incidence is greater than the critical angle;
substantially all light incident on the front face 58 from within the panel 12 is transmitted out of the panel if the angle of incidence is less than the critical angle; and
no substantial amount of light incident on the front face 58 from within the panel 12 is scatteringly reflected.
By contrast, the rear face 28 of the panel 12 has a degree of mattness which is non-uniform over the rear face so that, depending on the position on the rear face 28:
a proportion of light incident on the rear face 28 from within the panel 12 is specularly reflected; and
a proportion of light incident on the rear face 28 from within the panel 12 is specularly reflected either directly or by being transmitted through the rear face 28 and then being specularly reflected back to the panel 12 by the matt white surface of the backing sheet 24.

The outer edge 60 of the panel 12 remote from the LEDs 40 may be substantially totally absorbent to light or may be slightly reflective. The sides 34 of the panel are preferably reflective.

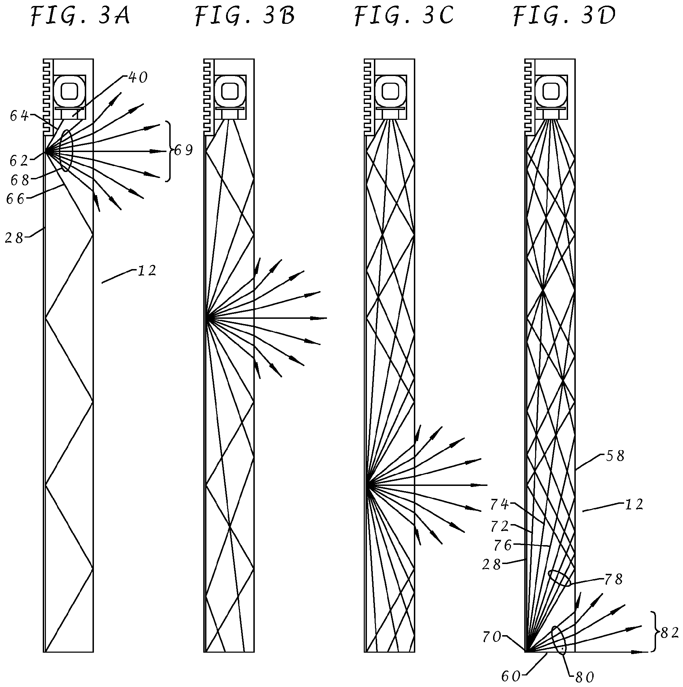

Referring to Figures 3A-D and considering only light rays travelling in the plane of the paper, it will be seen that at a point 62 (Figure 3A) on the rear face 28 of the panel 12 adjacent the LED 40, substantially the only incident light is a high intensity ray 64 received directly from the LED 40. A proportion of this light (i.e. of lower intensity than the ray 64) is specularly reflected, as shown by ray 66, and a proportion is scatteringly reflected, as shown by the rays 68, and illuminates the panel 12 in the region 69. By contrast, at a point 70 (Figure 3D) on the rear face 28 of the panel 12 adjacent the far edge 60 of the panel 12, the incident light comprises:
a ray 72 received directly from the LED 40;
a ray 74 received after one specular reflection from the front face 58;
a ray 76 received after one reflection from the rear face 28 and one specular reflection from the front face 58; and
a number of other rays 78 received after multiple reflections from the front and rear faces 58,28 of the panel 12.

Each of these rays 72-78 is of lower intensity than the ray 64 received at point 62 (Figure 3A) due to the greater distance from the LED 40. Furthermore, the intensity of the rays 76,78 is further reduced due to the scattering reflections which occurred at the rear face 28 of the panel 12. Preferably, at the point 70 adjacent the far edge 60, the rear face 28 of the panel 12 is totally matt, so that none of the rays 72-78 is specularly reflected, in which case all of the rays 72-78 are scatteringly reflected as shown by the rays 80, and illuminate the panel in the region 82.

To a first order approximation, the intensity of the ray 64 incident on the point 62 adjacent the LED 40 is substantially greater than the total intensity of the rays 72-78 incident on point 70 adjacent the far edge 60 of the panel 12. Therefore, the rear face 28 of the panel 12 needs to be substantially more glossy (i.e. specularly reflect a greater proportion of light) at point 62 than at point 70 in order that the illumination provided by the rays 68 in region 69 is substantially equal to the illumination provided by the rays 80 in region 82. Indeed, to a first order approximation, the required glossiness of the rear face 28 of the panel 12 is related to the inverse of the distance from the LED 40. However, other factors affect uniform illumination of the front face 58 of the panel 12, notably the radiation pattern of the LEDs 40 (i.e. the variation of intensity with viewing angle) and edge effects. Therefore, the non-uniformity of glossiness of the rear face 28 of the panel 12 that is required in order to achieve uniform illumination of the front face 58 of the panel 12 is best determined by trial and error.

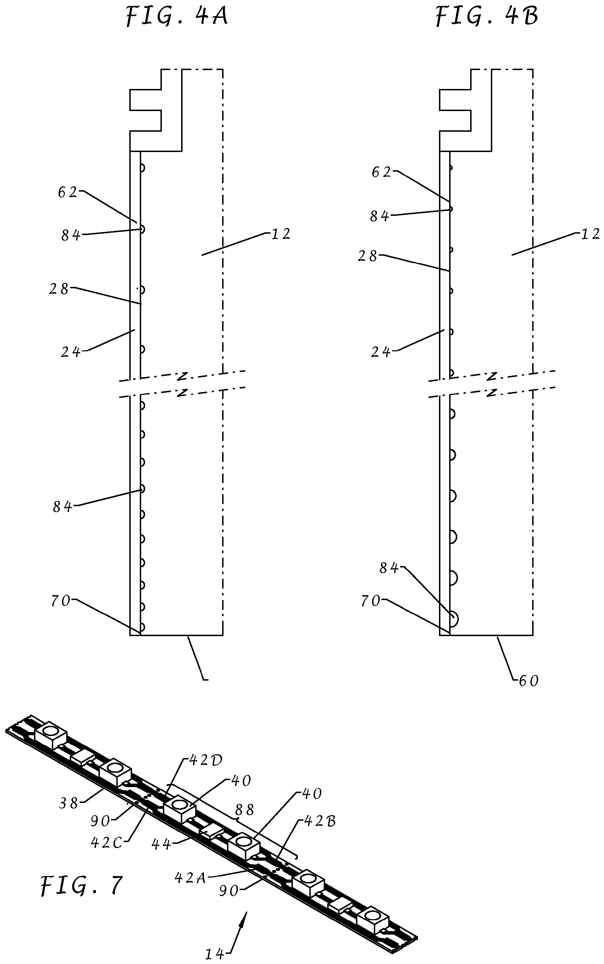

The non-uniform glossiness of the rear face 28 of the panel 12 may be achieved in a number of ways. For example, discrete formations may be provided in the rear face 28, such as grooves cut or laser-engraved into the rear face 28. Figure 4A shows an example where parallel grooves 84 of a particular depth are formed in the rear face 28, and the pitch between adjacent grooves progressively decreases from the point 62 near the LED 40 to the point 70 near the far edge 60 of the panel 12 parallel grooves 84 of the particular depth but a smaller pitch are formed in the rear face 28. Figure 4B shows an example where parallel grooves 84 of a particular pitch are formed in the rear face 28, and the depth of the grooves 84 progressively increases from the point 62 near the LED 40 to the point 70 near the far edge 60 of the panel 12. It will be appreciated that the arrangements of Figures 4A and 4B may be combined to provide for surface irregularities with both a non-uniform pitch and a non-uniform depth.

Instead of providing discrete regular formations, the glossiness of the rear face 28 may also be rendered non-uniform by other treatments, such as rubbing the face 28 with a rotating wire wheel with varying pressure being applied, rubbing the face 28 with varying grades of abrasive paper, or sand-blasting the rear face 28 with varying exposure times.

In the first embodiment described above, the panel 12 is rectangular. However, the panel may have any regular or irregular shape.

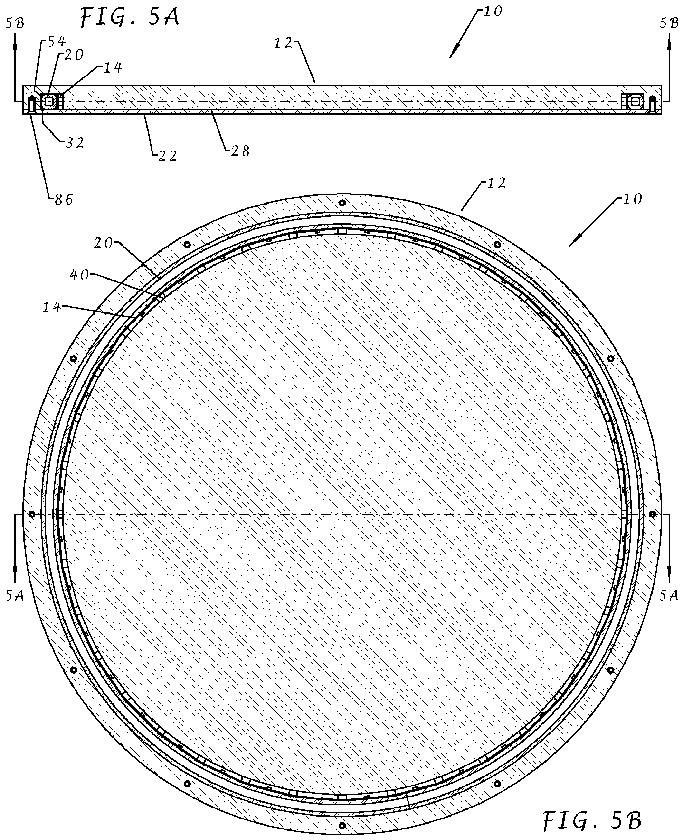

For example, Figures 5A & B show a second embodiment of the invention with a circular panel 12 having a circular groove 32 for the PCB assembly 14 and compression element 20. Because the PCB 38 and compression element 20 are flexible, they can both readily be formed into circles. The heats ink 22 of the second embodiment is a plain circular disc which is secured to the rear of the panel 12 by screws 86. It will be noted that because the compression element 20 engages both the plate of the heats ink 22 and the outer edge of the groove 32, the compression element 20 prevents the ingress of any moisture into the region occupied by the PCB assembly 14. At least the face of the plate of the heatsink 22 facing the panel 12 is finished as matt white so as to serve the same function as the backing sheet 24 in the first embodiment of the invention. The connection lead (not shown) in the second embodiment may enter the panel through a grommet in the plate of the heats ink 22 or in the outer wall of the groove 32. Because of the circular shape of the panel 12, the required non-uniformity of the glossiness of the rear face 28 of the panel 12 in order to achieve uniform illumination may be less pronounced than in the case of the first embodiment. The non-uniformity will be rotationally symmetrical through any angle about the centre of the panel 12.

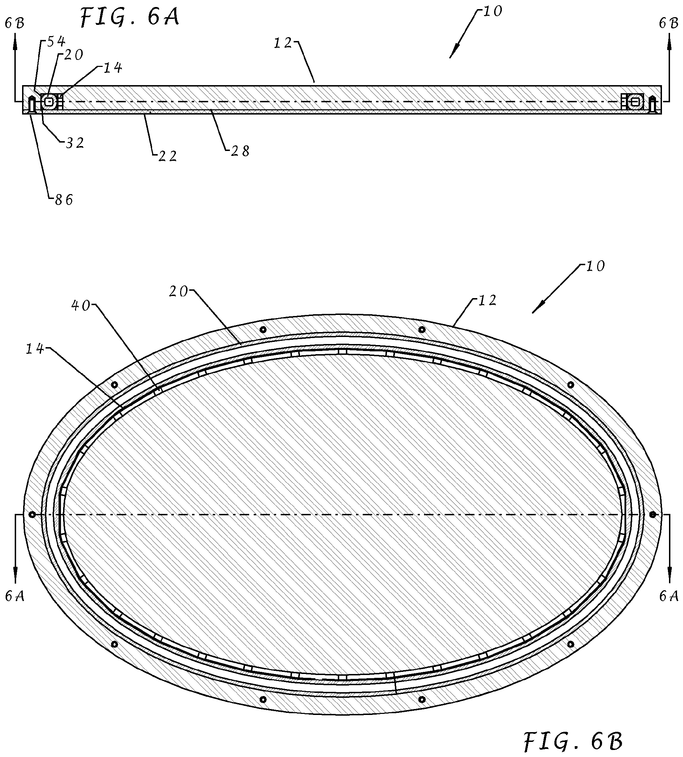

Figures 6A & B show a third embodiment of the invention which is similar to the second embodiment except that the panel 12 is elliptical. In this case, the required non-unifomity of the glossiness of the rear face 28 of the panel 12 will be more complex than in the first and second embodiments but can be ascertained by trial and error.

Figure 7 shows more detail of a PCB assembly 14 which may be used in the embodiments of the invention. As described above, the PCB assembly 14 comprises a flexible PCB 38 made from Kapton®. The PCB 38 is in the form of a strip many metres long and is divided up into identical sections 88 (three of which are shown in Figure 7) separated by perforated break lines 90. Each section 88 comprises two connecting pads 42A,B at one end and two connecting pads 42C,D at the opposite end. In each section 88, the tracks of the PCB 38 connect: pad 42A to pad 42C; pad 42B to pad 42D; and pad 42B to pad 42C via a plurality of LEDs 40 and a current regulator 44 in series. Also, across each break line 90, the tracks of the PCB 38 connect: pads 42A and 42C of the adjacent sections 88; and pads 42B and 42D of adjacent sections. The PCB assembly 14 can therefore be cut or snapped apart along a break line 90 to form any desired length of assembly 14 which is an integer multiple of the length of each section 88. The electricity supply can then be connected to the pads 42A,B at one end of the length of PCB assembly 14, and the pads 42C,D at the opposite end may be left unconnected, connected to another PCB assembly 14 or connected back to the pads 42A,B at the first end in a ring. Each current regulator 44 serves to regulate the current through the LEDs 40 in its section 88 to a desired value provided that the voltage supplied to the section 88 is sufficiently high for the regulator 44 not to drop out and provided the supply voltage is not too high to overload the regulator 44. Uniform illumination of the LEDs 40 can therefore be achieved despite variation in the supply voltage, voltage drops along the length of the PCB assembly 14, and the number of sections 88 in the PCB assembly 14.

In a modification to the PCB assembly 14 of Figure 7, the current regulators 44 are adjustable, and further interconnected connecting pads are provided at each end of each section 88 for receiving a control voltage and supplying the control voltage to each current regulator 44.

In all of the embodiments described above, the panel 12 may be clear or tinted. Also, the front face 58 of the panel 12 may be unmarked so that substantially the whole of the panel 12 is illuminated. Alternatively, the front face 58 of the panel may be masked with an opaque or contrastingly-coloured graphic in a conventional manner. The colours of the LEDs 40 may be chosen to suit the colours of the graphic. The LEDs 40 may be driven to provide a flashing sign, and a dimming arrangement may be provided, which may be responsive to ambient light. The panel assembly 10 may be incorporated into another structure.

It should be noted that the embodiments of the invention has been described above purely by way of example and that many other modifications and developments may be made thereto within the scope of the present invention.

## Claims

1. A light guide panel assembly comprising:
a translucent panel (12) having a light-receiving edge (52), a groove (32) being formed in one face (28) of the panel (12), the groove (32) having a first side wall forming a light-receiving edge (52) of the panel (12);
a light-emitting device (40) mounted on a circuit board (38), the light emitting device (40) being in contact with the light-receiving edge (52) and arranged for producing a divergent beam of light and projecting the light into the panel (12) from the light-receiving edge (52) of the panel (12);
a compressible element (20) formed of a resilient, flexible and thermally conductive material disposed in the groove (32) so as to abut a rear face of the circuit board (38); and
a heatsink (22) arranged to compress the compressible element (20) into the groove (32) so the compressible element (29) is resiliently compressed between the rear face the circuit board (38) and the heatsink (22) so as to urge itself into contact with said rear face of the circuit board (38) and the heatsink (22) to provide a thermal path therebetween and to urge the light emitting device (40) into contact with said light receiving edge (52) so as to hold the light emitting device (40) in place on said light receiving edge (52), wherein:
the groove (32) has a bottom wall (56) and a second side wall (54) opposite the first side wall (52);
the compressible element (29) is disposed in compression against the bottom wall (56) and the second side wall (54) of the groove; and
the heatsink (22) closes the groove (32).

2. A light guide panel assembly as claimed in claim 1, wherein:
the light emitting device (40) is one of a plurality of surface mounted light-emitting devices mounted on one face of a common elongate circuit board (38) and
the compressible element (29) is elongate and is compressed against the heatsink (22) and an opposite face of the circuit board (38).

3. A light guide panel assembly as claimed in claim 2, wherein:
the light-receiving edge of the panel includes at least a portion which is not straight; and
the circuit board is flexible and conforms to the shape of the light-receiving edge of the panel.

4. A light guide panel assembly as claimed in claim 2 or 3, wherein:
the circuit board has connection pads (42) at each end of the circuit board.

5. A light guide panel assembly as claimed in any preceding claim in which the compressible element (29) comprises a tubular O-rope.

6. A light guide panel assembly as claimed in any preceding claim, wherein:
the panel has a front face (58) and a rear face (28);
the front face of the panel has at least one light-emitting surface portion which specularly reflects and transmits light incident thereon from within the panel;
the rear face of the panel specularly reflects and scatteringly reflects light incident thereon from within the panel.

7. A light guide panel assembly as claimed in any preceding claim, wherein:
the rear face of the panel specularly reflects and scatteringly reflects light incident thereon from within the panel with a ratio of specular to scattering reflection which is non-uniform across the rear face of the panel.

8. A light guide panel assembly (10) as claimed in any preceding claim in which the light-emitting device (40) comprises a plurality of flat-faced LEDs.

9. A light guide panel assembly as claimed in claim 8 in which the light receiving edge of the panel comprises a polished surface with which said flat-faced LEDs are in contact.

10. A light guide panel assembly as claimed in any preceding claim in which the compressible element is arranged to prevent the ingress of any moisture which passes between the panel (12) and the heatsink (22) from reaching the light-emitting device (40).

## Patentansprüche

1. Lichtführungsschalttafelanordnung, umfassend:
eine lichtdurchlässige Schalttafel (12) mit einer Lichtempfängerflanke (52), wobei eine Nut (32) in einer Fläche (28) der Schalttafel (12) gebildet ist, wobei die Nut (32) eine erste Seitenwand hat, die eine Lichtempfängerflanke (52) der Schalttafel (12) bildet;
eine Lichtabgabevorrichtung (40), die an der Leiterplatte (38) befestigt ist, wobei sich die Lichtabgabevorrichtung (40) in Kontakt mit der Lichtempfängerflanke (52) befindet und für ein Erzeugen eines divergierenden Lichtstrahls und ein Projizieren des Lichts in die Schalttafel (12) von der Lichtempfängerflanke (52) der Schalttafel (12) angeordnet ist;
ein komprimierbares Element (20), das aus einem elastischen, flexiblen und wärmeleitendem Material gebildet ist, das in der Nut (32) angeordnet ist, um an eine Rückseite der Leiterplatte (38) zu grenzen; und
einen Kühlkörper (22), der angeordnet ist, um das komprimierbare Element (20) so in die Nut (32) zu pressen, dass das komprimierbare Element (29) elastisch zwischen die Rückseite der Leiterplatte (38) und den Kühlkörper (22) gepresst ist, um sich selbst in Kontakt mit der Rückseite der Leiterplatte (38) und dem Kühlkörper (22) zu bringen, um einen Wärmepfad dazwischen bereitzustellen, und um die Lichtabgabevorrichtung (40) in Kontakt mit der Lichtempfängerflanke (52) zu bringen, um die Lichtabgabevorrichtung (40) an der Lichtempfängerflanke (52) am Platz zu halten (52), wobei:
die Nut (32) eine untere Wand (56) und eine zweite Seitenwand (54) gegenüber der ersten Seitenwand (52) hat;
das komprimierbare Element (29) gegen die untere Wand (56) und die zweite Seitenwand (54) der Nut zusammengedrückt angeordnet ist; und
der Kühlkörper (22) die Nut (32) schließt.

2. Lichtführungsschalttafelanordnung nach Anspruch 1, wobei:
die Lichtabgabevorrichtung (40) eine aus einer Vielzahl von oberflächenmontierten Lichtabgabevorrichtungen ist, die an einer Fläche einer gewöhnlichen, länglichen Leiterplatte (38) befestigt sind, und
das komprimierbare Element (29) länglich und gegen den Kühlkörper (22) und eine entgegengesetzte Fläche der Leiterplatte (38) gedrückt ist.

3. Lichtführungsschalttafelanordnung nach Anspruch 2, wobei:
die Lichtempfängerflanke der Schalttafel mindestens einen Abschnitt umfasst, der nicht gerade ist; und
die Leiterplatte flexibel ist und sich der Form der Lichtempfängerflanke der Schalttafel anpasst.

4. Lichtführungsschalttafelanordnung nach Anspruch 2 oder 3, wobei:
die Leiterplatte Verbindungskontaktstellen (42) an jedem Ende der Leiterplatte hat.

5. Lichtführungsschalttafelanordnung nach einem der vorangehenden Ansprüche, in der das komprimierbare Element (29) ein schlauchförmiges O-Seil umfasst.

6. Lichtführungsschalttafelanordnung nach einem der vorangehenden Ansprüche, wobei:
die Schalttafel eine Vorderseite (58) und eine Rückseite (28) hat;
die Vorderseite der Schalttafel mindestens einen lichtabgebenden Flächenabschnitt hat, der darauf einfallendes Licht aus dem Inneren der Schalttafel spiegelnd reflektiert und überträgt;
die Rückseite der Schalttafel darauf einfallendes Licht aus dem Inneren der Schalttafel spiegelnd reflektiert und zerstreuend reflektiert.

7. Lichtführungsschalttafelanordnung nach einem der vorangehenden Ansprüche, wobei:
die Rückseite der Schalttafel darauf einfallendes Licht aus dem Inneren der Schalttafel spiegelnd reflektiert und zerstreuend reflektiert mit einem Verhältnis von spiegelnder zu zerstreuender Reflexion, das über die Rückseite der Schalttafel uneinheitlich ist.

8. Lichtführungsschalttafelanordnung (10) nach einem der vorangehenden Ansprüche, in der die Lichtabgabevorrichtung (40) eine Vielzahl von flachen LEDs umfasst.

9. Lichtführungsschalttafelanordnung nach Anspruch 8, in der die Lichtempfängerflanke der Schalttafel eine polierte Fläche umfasst, mit der sich die flachen LED in Kontakt befinden.

10. Lichtführungsschalttafelanordnung nach einem der vorangehenden Ansprüche, in der das komprimierbare Element angeordnet ist, um zu verhindern, dass eingedrungene Feuchtigkeit, die sich zwischen der Schalttafel (12) und dem Kühlkörper (22) hindurchbewegt, die Lichtausgabevorrichtung (40) erreicht.

## Revendications

1. Ensemble panneau de guidage de lumière comprenant :
un panneau translucide (12) présentant une arête réceptrice de lumière (52), une rainure (32) étant formée dans une face (28) du panneau (12), la rainure (32) présentant une première paroi latérale formant une arête réceptrice de lumière (52) du panneau (12) ;
un dispositif émetteur de lumière (40) monté sur une carte de circuit (38), le dispositif émetteur de lumière (40) étant en contact avec l'arête réceptrice de lumière (52) et conçu pour produire un faisceau divergent de lumière et projeter la lumière dans le panneau (12) depuis l'arête réceptrice de lumière (52) du panneau (12) ;
un élément compressible (20) formé d'un matériau élastique, flexible et thermiquement conducteur disposé dans la rainure (32) de manière à venir en butée contre une face arrière de la carte de circuit (38) ; et
un dissipateur thermique (22) conçu pour comprimer l'élément compressible (20) dans la rainure (32) de manière que l'élément compressible (29) est comprimé élastiquement entre la face arrière de la carte de circuit (38) et le dissipateur thermique (22) de manière à être poussé à entrer en contact avec ladite face arrière de la carte de circuit (38) et le dissipateur thermique (22) pour former un chemin thermique entre ceux-ci et pour pousser le dispositif émetteur de lumière (40) à entrer en contact avec ladite arête réceptrice de lumière (52) de manière à maintenir le dispositif émetteur de lumière (40) en place sur ladite l'arête réceptrice de lumière (52),
la rainure (32) présentant une paroi inférieure (56) et une deuxième paroi latérale (54) opposée à la première paroi latérale (52) ;
l'élément compressible (29) étant disposé en compression contre la paroi inférieure (56) et la deuxième paroi latérale (54) de la rainure ; et
le dissipateur thermique (22) fermant la rainure (32).

2. Ensemble panneau de guidage de lumière tel que défini dans la revendication 1, dans lequel :
le dispositif émetteur de lumière (40) fait partie d'une pluralité de dispositifs émetteurs de lumière montés en surface montés sur une face d'une carte de circuit (38) allongée commune et
l'élément compressible (29) est allongé et est comprimé contre le dissipateur thermique (22) et une face opposée de la carte de circuit (38).

3. Ensemble panneau de guidage de lumière tel que défini dans la revendication 2, dans lequel :
l'arête réceptrice de lumière du panneau comprend au moins une partie qui n'est pas droite ; et
la carte de circuit est flexible et est conforme à la forme de l'arête réceptrice de lumière du panneau.

4. Ensemble panneau de guidage de lumière tel que défini dans la revendication 2 ou 3, dans lequel :
la carte de circuit présente des plots de connexion (42) à chaque extrémité de la carte de circuit.

5. Ensemble panneau de guidage de lumière tel que défini dans l'une quelconque des revendications précédentes, dans lequel l'élément compressible (29) comprend un tubulaire câble en forme de O.

6. Ensemble panneau de guidage de lumière tel que défini dans l'une quelconque des revendications précédentes, dans lequel :
le panneau présente une face avant (58) et une face arrière (28) ;
la face avant du panneau présente au moins une partie de surface émettrice de lumière qui réfléchit et transmet de manière spéculaire la lumière incidente sur celle-ci depuis l'intérieur du panneau ;
la face arrière du panneau réfléchit de manière spéculaire et de manière dispersée la lumière incidente sur celle-ci depuis l'intérieur du panneau.

7. Ensemble panneau de guidage de lumière tel que défini dans l'une quelconque des revendications précédentes, dans lequel :
la face arrière du panneau réfléchit de manière spéculaire et de manière dispersée la lumière incidente sur celle-ci depuis l'intérieur du panneau avec un rapport de réflexion spéculaire à réflexion dispersée qui n'est pas uniforme sur la face arrière du panneau.

8. Ensemble panneau de guidage de lumière (10) tel que défini dans l'une quelconque des revendications précédentes, dans lequel le dispositif émetteur de lumière (40) comprend une pluralité de DEL à face plate.

9. Ensemble panneau de guidage de lumière tel que défini dans la revendication 8, dans lequel l'arête réceptrice de lumière (52) comprend une surface polie avec laquelle lesdites DEL à face plate sont en contact.

10. Ensemble panneau de guidage de lumière tel que défini dans l'une quelconque des revendications précédentes, dans lequel l'élément compressible est conçu pour empêcher la pénétration d'une quelconque humidité qui passe entre le panneau (12) et le dissipateur thermique (22) d'atteindre le dispositif émetteur de lumière (40).
